(19) Europäisches Patentamt
European Patent Office
Office européen des brevets

(11) **EP 3 179 215 A1**

(12) **EUROPÄISCHE PATENTANMELDUNG**

(43) Veröffentlichungstag:
**14.06.2017 Patentblatt 2017/24**

(51) Int Cl.:
***G01D 5/20*** *(2006.01)*

(21) Anmeldenummer: **16199024.7**

(22) Anmeldetag: **16.11.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **07.12.2015 DE 102015224452**

(71) Anmelder: **ROBERT BOSCH GMBH**
**70442 Stuttgart (DE)**

(72) Erfinder:
• **Utermoehlen, Fabian**
**71229 Leonberg (DE)**
• **Leidich, Stefan**
**71277 Rutesheim (DE)**

(54) **SENSORANORDNUNG ZUR BERÜHRUNGSLOSEN ERFASSUNG VON TRANSLATIONSBEWEGUNGEN AN EINEM LINEAR VERSCHIEBBAREN BAUTEIL**

(57) Sensoranordnung zur berührungslosen Erfassung von Linearpositionen an einem beweglichen Bauteil, wobei das bewegliche Bauteil mit einem Target (20) gekoppelt ist, welches mindestens eine Metallfläche (24) aufweist und in Verbindung mit einer Spulenanordnung (42), welche mindestens eine flächige Detektionsspule (42) aufweist, mindestens eine Information zur Ermittlung der aktuellen Linearposition des verschiebbaren Bauteils erzeugt, dadurch gekennzeichnet, dass mindestens eine Messschaltung (3) die Induktivität (L) einer korrespondierenden flächigen Detektionsspule (42), welche sich in Abhängigkeit vom Überdeckungsgrad mit der mindestens einen Metallfläche (24) des beweglichen Targets (20) durch Wirbelstromeffekte ändert, in ein Messsignal ($U_M$) wandelt, welches eine Auswerte- und Steuereinheit (10) messtechnisch erfasst und zur Berechnung der Linearposition auswertet.

Fig. 1

EP 3 179 215 A1

**Beschreibung**

Die Erfindung geht aus von einer Sensoranordnung zur berührungslosen Erfassung von Linearpositionen nach der Gattung des unabhängigen Patentanspruchs 1.

Die Messung von Linearwegen erfolgt in der Regel durch Verwendung von Schiebepotentiometern. Dabei wird das sich bewegende Teil, dessen Translationsbewegung gemessen werden soll, mit dem Schleifkontakt des Potentiometers verbunden während der restliche Teil desselben am ortsfesten Teil der Anordnung verbleibt. Der ohmsche Widerstand des Schiebepotentiometers wird zur Bestimmung der relativen Verschiebung beider Elemente gemessen.

Zudem sind aus dem Stand der Technik verschiedene induktive Linearwegsensoren bekannt. Mehrheitlich wird die Kopplung zwischen einer Erregerspule und einer oder mehrerer Sensorspulen durch die Position eines Koppelelements (Target) beeinflusst. Die Auswertung von Koppelfaktoren erfordert eine aufwändige Elektronik.

Die WO 2007000653 A1 offenbart beispielsweise einen induktiven Winkel- und Linearwegsensor mit einer Erregerspule, mindestens einer Empfangsspule sowie einem beweglichen Koppelelement, welches die Stärke der induktiven Kopplung zwischen der Erregerspule und der Empfangsspule in Abhängigkeit der relativen Position des Koppelelementes in Bezug zu den Spulen vorgibt. Die Auswerteschaltung bestimmt die Position des Koppelelementes relativ zum Spulensystem aus den in den Empfangsspulen induzierten Spannungssignalen sowie einem als positionsunabhängig angenommenen Referenzsignal.

Offenbarung der Erfindung

Die erfindungsgemäße Sensoranordnung zur berührungslosen Erfassung von Linearpositionen mit den Merkmalen des unabhängigen Patentanspruchs 1 hat demgegenüber den Vorteil, dass die Auswertung bzw. die messtechnische Bestimmung der Spuleninduktivität bzw. der Wirkung der metallischen Überdeckung auf die mindestens eine Detektionsspule über eine Wandlung der Spuleninduktivität in ein Messsignal, vorzugsweise in eine analoge Spannung durchgeführt wird. Das implementierte Messprinzip wandelt magnetische in elektrische Energie. Dies ermöglicht die messtechnische Bestimmung der Induktivität der Detektionsspule in vorteilhafter Weise mit einem geringen Hardwareaufwand.

Eine Ausführungsform der erfindungsgemäßen Sensoranordnung ermöglicht die Implementierung des erfindungsgemäßen Messprinzips unter Verwendung von kostengünstigen Standardbauteilen, wie beispielsweise Transistoren, Dioden und Kondensatoren, in Verbindung mit einem Mikrocontroller, welcher einen Analog/Digitalwandler besitzt. Da solche Mikrocontroller bereits in großer Zahl im Fahrzeug vorhanden sind, kann eine solche Induktivitätsmessung einfach und kostengünstig implementiert werden. Zudem können die Messschaltungen jederzeit leicht in Konzepte integriert werden, welche für andere Funktionen bereits einen Mikrocontroller enthalten. Aufgrund der geringen Bauteilezahl ist eine spezielle ASIC Entwicklung möglich, jedoch nicht erforderlich. Der Einsatz des Messprinzips ist somit äußerst flexibel möglich.

Mittels der Sensoranordnung ist eine berührungslose Erfassung von Linearverschiebungen zwischen zwei Bauteilen möglich, wobei eines der Bauteile mit einem Target gekoppelt ist, welches mindestens eine Metallfläche aufweist. Das Target erzeugt in Verbindung mit einer als ortsfest angenommenen Spulenanordnung, welche mindestens eine flächige Detektionsspule aufweist, mindestens eine Information zur Ermittlung der aktuellen Linearverschiebung von Target zur Spulenanordnung. Erfindungsgemäß wandelt mindestens eine Messschaltung die Induktivität einer korrespondierenden flächigen Detektionsspule, welche sich in Abhängigkeit vom Überdeckungsgrad mit der mindestens einen Metallfläche des Targets durch Wirbelstromeffekte ändert, in ein Messsignal, welches eine Auswerte- und Steuereinheit messtechnisch erfasst und zur Berechnung der Linearposition auswertet.

Unter der Auswerte- und Steuereinheit kann vorliegend eine elektrische Schaltung oder ein elektrisches Gerät, wie beispielsweise ein Steuergerät verstanden werden, welches erfasste Sensorsignale verarbeitet bzw. auswertet. Die Auswerte- und Steuereinheit kann mindestens eine Schnittstelle aufweisen, die hard-und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Auswerte- und Steuereinheit beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung der Auswertung verwendet wird, wenn das Programm von der Auswerte- und Steuereinheit ausgeführt wird.

Durch die in den abhängigen Ansprüchen aufgeführten Maßnahmen und Weiterbildungen sind vorteilhafte Verbesserungen der im unabhängigen Patentanspruch 1 angegebenen Sensoranordnung zur berührungslosen Erfassung von Linearpositionen möglich.

Besonders vorteilhaft ist, dass die mindestens eine Messschaltung einen Kondensator umfassen kann, welcher elektrisch parallel zur auszuwertenden Detektionsspule geschaltet werden und während eines Messvorgangs eine durch die Induktivität der Detektionsspule gespeicherte Energie aufnehmen kann. Die magnetische Energie der Induktivität der Detektionsspule kann vorzugsweise mittels eines gerichteten Stromimpulses über eine Diode zum Kondensator übertragen werden, welcher die übertragene Energie als elektrische Energie speichern kann. Während eines Auswertevorgangs kann der Kondensator die gespeicherte elektrische Energie als Messsignal an die Auswerte- und Steuereinheit ausgeben. Vorzugsweise ist das Messsignal ein Spannungssignal oder ein Stromsignal.

In vorteilhafter Ausgestaltung der erfindungsgemäßen Sensoranordnung kann die mindestens eine Messschaltung mehrere elektronische Schalter aufweisen, welche die Auswerte- und Steuereinheit über korrespondierende Ansteuersignale schalten kann. Die elektronischen Schalter können beispielsweise als Transistoren, vorzugsweise als Feldeffekttransistoren ausgeführt werden. Durch Ansteuern von korrespondierenden elektronischen Schaltern kann die Auswerte- und Steuereinheit die auszuwertende Detektionsspule während einer Erregungsphase mit einer Betriebsspannung und mit einem Bezugspotential verbinden. Zu Beginn des Messvorgangs kann die Auswerte- und Steuereinheit die auszuwertende Detektionsspule, beispielsweise durch Umschalten des korrespondierenden elektronischen Schalters, vom Bezugspotential trennen. Zu Beginn des Auswertevorgangs kann die Auswerte- und Steuereinheit die mindestens eine Detektionsspule, beispielsweise durch Umschalten des korrespondierenden elektronischen Schalters, von der Betriebsspannung trennen und einen Anschlusspunkt des Kondensators mit dem Bezugspotential verbinden. Die Auswerte- und Steuereinheit kann an einem gemeinsamen Anschlusspunkt des Kondensators und der korrespondierenden Detektionsspule das Messsignal zur Auswertung abgreifen.

In weiterer vorteilhafter Ausgestaltung der erfindungsgemäßen Sensoranordnung kann die Auswerte- und Steuereinheit einen Mikrocontroller mit einem A/D-Wandler aufweisen, welcher das Messsignal auswerten kann.

Ein Ausführungsbeispiel der Erfindung ist in den Zeichnungen dargestellt und wird in der nachfolgenden Beschreibung näher erläutert. In den Zeichnungen bezeichnen gleiche Bezugszeichen Komponenten bzw. Elemente, die gleiche bzw. analoge Funktionen ausführen.

Kurze Beschreibung der Zeichnungen

Fig. 1 zeigt eine schematische Draufsicht auf ein Ausführungsbeispiel einer erfindungsgemäßen Sensoranordnung zur berührungslosen Erfassung von Linearpositionen.

Fig. 2 zeigt eine schematische Draufsicht auf eine Detektionsspule in planarer Ausführung, die in den Ausführungsformen gemäß Fig. 1 eingesetzt werden kann.

Fig. 3 zeigt ein schematisches Schaltbild eines Ausführungsbeispiels einer Messschaltung für die erfindungsgemäße Sensoranordnung aus Fig. 1.

Ausführungsformen der Erfindung

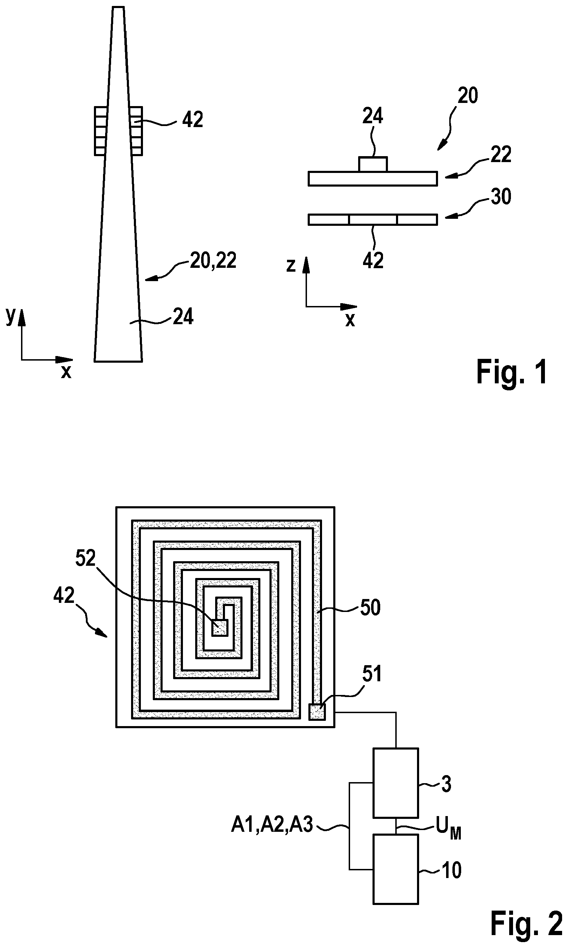

Wie in Fig. 1 ersichtlich ist, umfasst das dargestellte Ausführungsbeispiel zur Erfassung von Linearpositionen mindestens eine planare Detektionsspule 42 und ein beabstandet dazu ausgebildetes Target 20, welches mindestens eine Metallfläche 24 aufweist, die die Detektionsspule 42 in Abhängigkeit ihrer Linearposition (hier in y-Richtung) unterschiedlich überdeckt und die Induktivität der Spule 42 ändert.

Erfindungsgemäß wandelt mindestens eine Messschaltung 3 die Induktivität L der planaren Detektionsspule42, welche sich in Abhängigkeit vom Überdeckungsgrad mit der mindestens einen Metallfläche 24 des linear verschiebbaren Targets 20 durch Wirbelstromeffekte ändert, in ein Messsignal UM, welches eine Auswerte- und Steuereinheit 10 (in Figur 1 nicht eingezeichnet) messtechnisch erfasst und zur Berechnung der Linearposition auswertet. Auf der linken Seite in Figur 1 ist nur die Metallfläche 24 des Targets 20 eingezeichnet, wobei der Grundkörper 22, welcher die Metallfläche 24 trägt hier der Übersicht halber nicht eingezeichnet wurde.

Im in Fig. 1 dargestellten Ausführungsbeispiel umfasst die Sensoranordnung eine Detektionsspule 42 sowie ein Target 20 mit einer Metallfläche 24, die derart ausgebildet ist, dass sie die Induktivität L der Detektionsspule 42 durch eine positionsabhängige Überdeckung beeinflusst.

Wie aus Fig. 1 auf der rechten Seite weiter ersichtlich ist, ist die Detektionsspule 42 im dargestellten Ausführungsbeispiel an einer - insbesondere rechteckigen - Leiterplatte 30 angeordnet. Die Spule ist mit einer Auswerte- und Steuereinheit 10 elektrisch verbunden. Die Steuereinheit ist in Figur 1 nicht eingezeichnet, allerdings in Figur 2 zu sehen.

Der in den Zeichnungen transparent dargestellte rechteckförmige Grundkörper 22 des Targets 20 ist mit einem vorgegebenen gleichbleibenden vertikalen Abstand über bzw. unter der Sensor-Leiterplatte 30 angeordnet. Die Überdeckung der Detektionsspule 42 durch die leitfähige Metallfläche 24 des Targets 20 führt während einer Erregungsphase der Detektionsspule 42 mit einem Wechselstrom zur Erzeugung einer Induktionsspannung, welche durch das Metall kurzgeschlossen wird. Der Strom erzeugt ein Magnetfeld, welcher seiner Ursache entgegen wirkt. Letztendlich erscheint dadurch die Induktivität L der Detektionsspule 42 kleiner.

Die Messung der Induktivität L erlaubt die Bestimmung des Überdeckungsgrads und somit die Bestimmung der Linearposition des Targets 20. Bei dem dargestellten Ausführungsbeispiel kann das nicht näher dargestellte linear verschiebbare Bauteil z.B. ein Dämpfer oder eine Federgabel sein, die über eine Mechanik das Target über die Detektionsspulen bewegt.

Fig. 2 zeigt eine schematische Draufsicht auf eine planare Detektionsspule 42. Unter einer planaren Spule ist dabei eine Spule zu verstehen, deren Wicklungen bzw. Windungen alle im Wesentlichen in einer Ebene liegen. Zur Erhöhung der Induktivität kann die planare Spule in mehreren Ebenen einer Leiterplatte realisiert werden. Die Planarspule 42 besitzt einen ersten Anschluss 51 sowie einen zweiten Anschluss 52 sowie eine dazwischen angeordnete Leiterbahn 50, die in mehreren Ebenen verlaufen kann, jedoch im Wesentlichen spiralförmig in eine Richtung gewickelt ist.

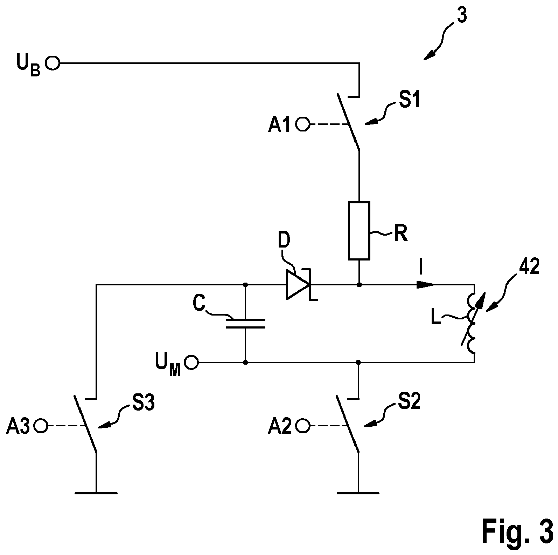

Figur 2 zeigt des Weiteren eine Messschaltung 3, die an die Detektionsspule 42 angeschlossen ist. Die Messschaltung 3 ist mit einer Auswerte- und Steuereinheit 10 verbunden, welche eine Spannung UM auswertet. Details der Messschaltung 3 werden im Folgenden unter Figur 3 beschrieben. Die Auswerte- und Steuereinheit 10 erzeugt Ansteuersignale A1, A2, A3 für die Messschaltung 3, die ebenfalls im Folgenden beschrieben werden.

Wie aus Fig. 3 weiter ersichtlich ist, umfasst die mindestens eine Messschaltung 3 einen Kondensator C, welcher elektrisch parallel zur auszuwertenden Detektionsspule 42 geschaltet ist und während eines Messvorgangs eine durch die Induktivität L der Detektionsspule 42 gespeicherte Energie aufnimmt. Die magnetische Energie der Induktivität L der Detektionsspule 42 ist im dargestellten Ausführungsbeispiel mittels eines gerichteten Stromimpulses über eine Diode D zum Kondensator C übertragbar, welcher die übertragene Energie als elektrische Energie speichert.

Während eines Auswertevorgangs gibt der Kondensator C die gespeicherte elektrische Energie als Messsignal UM an die Auswerte- und Steuereinheit 10 aus. Zudem weist die mindestens eine Messschaltung 3 mehrere elektronische Schalter S1, S2, S3 auf, welche die Auswerte- und Steuereinheit 10 über korrespondierende Ansteuersignale A1, A2, A3 schaltet. Die elektronischen Schalter S1, S2, S3 sind im dargestellten Ausführungsbeispiel als Transistoren, vorzugsweise als Feldeffekttransistoren ausgeführt.

Wie aus Fig. 3 weiter ersichtlich ist, ist die Detektionsspule 42 jeweils über einen ersten elektronischen Schalter S1, welcher von der Auswerte- und Steuereinheit 10 über ein erstes Ansteuersignal A1 schaltbar ist, mit einer Betriebsspannung $U_B$ und über einen zweiten elektronischen Schalter S2, welcher von der Auswerte- und Steuereinheit 10 über ein zweites Ansteuersignal A2 schaltbar ist, mit einem Bezugspotential, hier Masse verbindbar.

Während der Erregungsphase verbindet die Auswerte- und Steuereinheit 10 die auszuwertende Detektionsspule 42 durch Schalten des ersten elektronischen Schalters S1 mit der Betriebsspannung $U_B$ und durch Schalten des zweiten elektronischen Schalters S2 mit dem Bezugspotential.

Zu Beginn des Messvorgangs trennt die Auswerte- und Steuereinheit 10 die auszuwertende Detektionsspule 42 durch Umschalten des zweiten Schalters S2 von dem Bezugspotential. Nach dem Umschaltvorgang des zweiten Schalters S2 wird die Energie der korrespondierenden Detektionsspule 42 durch die Diode D zum Kondensator C übertragen. Die Spannung UM am Kondensator C kann ungefähr mit den Gleichungen (1) und (2) berechnet werden.

$$\frac{C}{2}U^2 = \frac{L}{2}I^2 \qquad\qquad (1)$$

$$U = I\sqrt{\frac{L}{C}} \qquad\qquad (2)$$

Zu Beginn des Auswertevorgangs trennt die Auswerte- und Steuereinheit 10 die mindestens eine Detektionsspule 42 von der Betriebsspannung $U_B$ durch Umschalten des ersten Schalters S1, der zweite Schalter S2 ist bereits geöffnet. Durch das Schalten eines dritten Schalters S3 verbindet die Auswerte- und Steuereinheit 10 einen Anschlusspunkt des Kondensators C mit dem Bezugspotential. Dadurch kann die Auswerte- und Steuereinheit 10 das Messsignal UM an einem gemeinsamen Anschlusspunkt des Kondensators C und der korrespondierenden Detektionsspule 42 abgreifen. Das Messsignal UM kann somit als analoges Spannungssignal am Verbindungspunkt zwischen der Detektionsspule 42 und dem Kondensator C gegen das Bezugspotenzial gemessen werden. Zur Auswertung des Messsignals UM weist die Auswerte- und Steuereinheit 10 einen Mikrocontroller mit einem A/D-Wandler auf, welcher das analoge Messsignal UM in ein digitales Signal umwandelt.

Der Vorteil des beschriebenen Messprinzips besteht darin, dass durch die Verwendung von günstigen Standardbauteilen, wie beispielsweise Transistoren S1, S2, S3, Diode D und Kondensator C mittels eines Mikrocontrollers, der einen A/D-Wandler aufweist, bereits eine Messung der Induktivität L durchgeführt werden kann und somit jederzeit leicht in Konzepte integrierbar ist, welche für andere Funktionen bereits einen Mikrocontroller enthalten. Aufgrund der geringen Bauteilezahl ist eine spezielle ASIC Entwicklung möglich, jedoch nicht erforderlich. Der Einsatz des Messprinzips ist somit äußerst flexibel.

Bei einer Änderung der Induktivität L von beispielsweise 1,25 $\mu$H zu 1,0 $\mu$H und einem Speicherkondensator C mit 100 pF würde ein Strom I von 56 mA in der korrespondierenden Detektionsspule 42 zu einer Spannung UM am Kondensator C von ca. 4,38 V bzw. 5,0 V führen (-60% Wandlungseffizienz). Die Begrenzung des Stroms I kann durch einen Vorwiderstand R erfolgen, welcher beispielsweise einen Wert von ca. 50 $\Omega$ aufweist. Der Umladevorgang dauert ca. 1 $\mu$s. Die Messzeit ist somit potenziell sehr kurz. Je nach Messbereich gilt es Spannungsunterschiede von ca. 1 mV zu detektieren. Wird der Messbereich des A/D-Wandlers nicht auf den erforderlichen Bereich von ungefähr 4,0 bis 5,0 V begrenzt, kann eine Auflösung von 13 Bit verwendet werden.

Das Messen von Gleichspannungen an Kondensatoren ist in vorteilhafter Weise vergleichsweise rauscharm möglich. Die Reduzierung der Rauschamplitude auf unter 1 mV ist möglich. Das Messsignal ist jedoch direkt von der Kapazität des Kondensator C abhängig, welche einem Temperaturgang (<30 ppm/K) unterliegt. Die Alterung und die Spannungsabhängigkeit der Kapazität des Kondensators C kann durch Verwendung von NP0-Dielektrika weitgehend minimiert werden. Während der Messung liegt die Diode D, welcher vorzugsweise als Schottky-Diode ausgeführt ist, parallel zum Kondensator C. Der korrespondierende Leckstrom der Diode D ist stark von der Temperatur abhängig, und kann beispielsweise $10^{-4}$ $\mu$A bei -25°C und 100 $\mu$A bei 125°C betragen. Im Fall einer Messspannung von 5V entspricht dies einem Entladewiderstand von minimal 50 k$\Omega$. Die Zeitkonstante des korrespondierenden RC-Glieds beträgt somit minimal 5 $\mu$s. Der A/D-Wandler weist vorzugsweise eine Samplingrate von >200 kS auf. Durch Aufnahme von zwei oder mehr Samples kann der exponentielle Spannungsabfall bestimmt und die ursprüngliche Messspannung extrapoliert werden. Über den bekannten Zusammenhang des Diodenleckstroms und der Temperatur kann zudem die Temperatur bestimmt werden. Diese Information kann in vorteilhafter Weise für weitergehende Temperaturkorrekturen verwendet werden.

Die Übertragung der magnetischen Energie der korrespondierenden Detektionsspule 42 in elektrische Energie des Kondensators C erfolgt durch einen gerichteten Stromimpuls, wobei die Diode D einen Rückfluss verhindert. EMV-Störungen entstehen durch Wechselsignale. Diese könnten durch die Diode D gleichgerichtet werden. Eventuell ist es möglich einen Bypass für Wechselfelder zu realisieren ohne die Diodenwirkung aufzuheben. Das System ist prinzipiell in der Lage Störungen zu erkennen. Da die Messung der Kondensatorspannung bei deaktivierter Spulenerregung erfolgt, kann die Spannung des induzierten Störsignals in vorteilhafter Weise vom Messsignal UM unterschieden werden.

**Patentansprüche**

1. Sensoranordnung zur berührungslosen Erfassung von Linearpositionen an einem beweglichen Bauteil, wobei das bewegliche Bauteil mit einem Target (20) gekoppelt ist, welches mindestens eine Metallfläche (24) aufweist und in Verbindung mit einer Spulenanordnung (30, 42), welche mindestens eine flächige Detektionsspule (42) aufweist, mindestens eine Information zur Ermittlung der aktuellen Linearposition des verschiebbaren Bauteils erzeugt, **dadurch gekennzeichnet, dass** mindestens eine Messschaltung (3) die Induktivität (L) einer korrespondierenden flächigen Detektionsspule (42), welche sich in Abhängigkeit vom Überdeckungsgrad mit der mindestens einen Metallfläche (24) des beweglichen Targets (20) durch Wirbelstromeffekte ändert, in ein Messsignal (UM) wandelt, welches eine Auswerte- und Steuereinheit (10) messtechnisch erfasst und zur Berechnung der Linearposition auswertet.

2. Sensoranordnung nach Anspruch 1, **dadurch gekennzeichnet, dass** die mindestens eine Messschaltung (3) einen Kondensator (C) umfasst, welcher elektrisch parallel zur auszuwertenden Detektionsspule (42) geschaltet ist und während eines Messvorgangs eine durch die Induktivität (L) der Detektionsspule (42) gespeicherte Energie aufnimmt.

3. Sensoranordnung nach Anspruch 2, **dadurch gekennzeichnet, dass** die magnetische Energie der Induktivität (L) der Detektionsspule (42) mittels eines gerichteten Stromimpulses über eine Diode (D) zum Kondensator (C) übertragbar ist, welcher die übertragene Energie als elektrische Energie speichert.

4. Sensoranordnung nach Anspruch 3, **dadurch gekennzeichnet, dass** der Kondensator (C) die gespeicherte elektrische Energie während eines Auswertevorgangs als Messsignal (UM) an die Auswerte- und Steuereinheit (10) ausgibt.

**5.** Sensoranordnung nach einem der Ansprüche 1 bis 4, **dadurch gekennzeichnet, dass** das Messsignal (UM) ein Spannungssignal oder ein Stromsignal ist.

**6.** Sensoranordnung nach einem der Ansprüche 1 bis 5, **dadurch gekennzeichnet, dass** die mindestens eine Messschaltung (3) mehrere elektronische Schalter (S1, S2, S3) aufweist, welche die Auswerte- und Steuereinheit (10) über korrespondierende Ansteuersignale (A1, A2, A2) schaltet.

**7.** Sensoranordnung nach Anspruch 6, **dadurch gekennzeichnet, dass** die Auswerte- und Steuereinheit (10) die auszuwertende Detektionsspule (42) während einer Erregungsphase mit einer Betriebsspannung ($U_B$) und mit einem Bezugspotential verbindet.

**8.** Sensoranordnung nach Anspruch 6 oder 7, **dadurch gekennzeichnet, dass** die Auswerte- und Steuereinheit (10) die auszuwertende Detektionsspule (42) zu Beginn des Messvorgangs vom Bezugspotential trennt.

**9.** Sensoranordnung nach Anspruch 6, **dadurch gekennzeichnet, dass** die Auswerte- und Steuereinheit (10) zu Beginn des Auswertevorgangs die mindestens eine Detektionsspule (42) von der Betriebsspannung ($U_B$) trennt und einen Anschlusspunkt des Kondensators (C) mit dem Bezugspotential verbindet, wobei die Auswerte- und Steuereinheit (10) an einem gemeinsamen Anschlusspunkt des Kondensators und der korrespondierenden Detektionsspule (42) das Messsignal (UM) abgreift.

**10.** Sensoranordnung nach Anspruch 9, **dadurch gekennzeichnet, dass** die Auswerte- und Steuereinheit (10) einen Mikrocontroller mit einem A/D-Wandler aufweist, welcher das Messsignal (UM) auswertet.

Fig. 1

Fig. 2

Fig. 3

**Europäisches Patentamt**
**European Patent Office**
**Office européen des brevets**

# EUROPÄISCHER RECHERCHENBERICHT

Nummer der Anmeldung

EP 16 19 9024

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 672 323 A2 (CHERRY GMBH [DE]) 21. Juni 2006 (2006-06-21) | 1,5,6 | INV. G01D5/20 |
| Y | * Absätze [0001], [0022], [0023], [0030], [0031], [0041]; Abbildungen 2-5 * | 2-4,7-10 | |
| | ----- | | |
| X | EP 1 975 570 A2 (CHERRY GMBH [DE]) 1. Oktober 2008 (2008-10-01) | 1,5,6 | |
| Y | * Absätze [0027] - [0051]; Abbildungen 5,6a * | 2-4,7-10 | |
| | ----- | | |
| Y | DE 10 2007 055155 A1 (SCHUBACH RUDOLF [DE]) 28. Mai 2009 (2009-05-28) * Absätze [0015] - [0022], [0034], [0036], [0037], [0042] - [0060], [0065] * | 2-4,7-10 | |
| | ----- | | |
| Y | EP 2 313 967 A1 (UNIV GENT [BE]) 27. April 2011 (2011-04-27) * Absätze [0030] - [0061]; Abbildungen 1,5-12 * | 2-4,7-10 | RECHERCHIERTE SACHGEBIETE (IPC) G01D |
| | ----- | | |

Der vorliegende Recherchenbericht wurde für alle Patentansprüche erstellt

| Recherchenort | Abschlußdatum der Recherche | Prüfer |
|---|---|---|
| München | 6. April 2017 | Kurze, Volker |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 19 9024

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-04-2017

| Im Recherchenbericht angeführtes Patentdokument | Datum der Veröffentlichung | Mitglied(er) der Patentfamilie | Datum der Veröffentlichung |
|---|---|---|---|
| EP 1672323 A2 | 21-06-2006 | EP 1672323 A2<br>US 2006290346 A1 | 21-06-2006<br>28-12-2006 |
| EP 1975570 A2 | 01-10-2008 | CN 101424508 A<br>DE 102007015524 A1<br>EP 1975570 A2<br>JP 4912347 B2<br>JP 2008256693 A | 06-05-2009<br>09-10-2008<br>01-10-2008<br>11-04-2012<br>23-10-2008 |
| DE 102007055155 A1 | 28-05-2009 | KEINE | |
| EP 2313967 A1 | 27-04-2011 | CY 1113256 T1<br>DK 2313967 T3<br>EP 2313967 A1<br>ES 2391879 T3<br>WO 2010006851 A1 | 13-04-2016<br>22-10-2012<br>27-04-2011<br>30-11-2012<br>21-01-2010 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007000653 A1